# EUROPEAN PATENT APPLICATION

(11) **EP 2 730 773 A2**
(43) Date of publication of application: **14.05.2014**
(21) Application number: 13005257.4
(22) Date of filing: 07.11.2013
(51) Int. Cl.: F02K 1/50, F02K 1/12

(54) **A gas turbine engine exhaust nozzle**

(30) Priority: 13.11.2012 GB 201220378
(71) Applicant: Rolls-Royce plc, London SW1E 6AT (GB)
(72) Inventor: Webster, John Richard, Derby, DE23 6AF (GB)
(74) Representative: Roberts, Nicholas John

(57) **Abstract**

An exhaust nozzle 234 comprising inner and outer walls defined by a turbine casing 233 and a nacelle 230 respectively. A duct in the form of a bypass duct 232 is defined therebetween through which a bypass flow B flows in use. The nacelle 230 comprises a fixed upstream wall section 240 and at least one radially movable downstream wall section 242. At least one closure element in the form of a first slat 248 is provided, which is locatable across the second outlet 246 extending in a generally axial direction. A downstream end 250 of the first slat 248 is radially moveable between an open position in which the second outlet 246 is open, and a closed position in which the second outlet 246 is closed.

## Description

### Field of the Invention

The present invention relates to a gas turbine engine exhaust nozzle, and in particular to a variable area gas turbine engine exhaust nozzle.

### Background to the Invention

Gas turbine engines are widely used to power aircraft. As is well known, the engine provides propulsive power by generating a high velocity stream of gas which is exhausted rearwards through an exhaust nozzle. A single high velocity gas stream is produced by a turbo jet gas turbine engine. Alternatively, two streams, a core exhaust and a bypass exhaust, are generated by a ducted fan gas turbine engine (also known as a bypass gas turbine engine).

The optimum area of the nozzle exit of a gas turbine engine exhaust nozzle depends on a variety of factors, such as the ambient conditions of temperature and pressure, and the mass flow of exhaust gas, which depends on the operating condition of the engine. Aircraft engines spend a substantial proportion of their life at cruise (i.e. at high altitude, low temperatures and moderate thrust), and consequently nozzle exit areas are normally optimised for cruise conditions. Over the operating cycle of the engine, this provides the optimum overall performance and fuel efficiency. However, on takeoff, when the power requirement of the engine is greater, the ambient temperature is higher and the ambient pressure is higher than at cruise, the optimum nozzle exit area is greater than it is at cruise. This difference in nozzle exit area is however mostly due to the difference in thrust. The optimum nozzle area subsequently decreases during climb as the power requirement is reduced. Variable area nozzles have been proposed in order to modulate the nozzle exit area during takeoff and climb as the ideal nozzle exit area varies throughout the flight cycle. Such variable area nozzles have found to be particularly advantageous for bypass gas turbine engines. In particular, bypass gas turbine engines having a bypass ratio (i.e. the ratio between the mass flow through the bypass duct and the mass flow through the core) greater than approximately 10:1 may require a variable bypass exhaust nozzle to maintain operability of the engine at all conditions in order to avoid stall or flutter of the fan for example. Engines having a high bypass ratio are alternatively referred to as having a low specific thrust, i.e. having a low thrust per unit of mass flow rate through the engine. However, bypass gas turbine engines having a lower bypass ratio (i.e. having a high specific thrust), as well as turbojets (i.e. gas turbine engines having a bypass ratio of 0), may also benefit from a variable area exhaust nozzle, as a variable area exhaust nozzle may provide higher efficiency and lower overall fuel consumption for example.

A first example of such a variable area nozzle is disclosed in GB 2374121, and comprises a series of tabs at the bypass exhaust nozzle, alternative ones of which are displaceable radially outwardly relative to fixed tabs in order to provide an increase in the nozzle exit area. Similar arrangements are also known for use in turbojet engines. However, the moveable tabs require a relatively large length in order to accommodate the required change in nozzle exit area, which may be as large as 20% for high bypass ratio engines, and must therefore be made relatively stiff in order to resist aerodynamic loads in flight. As a result, such arrangements have been found to be relatively heavy and difficult to actuate. The large length of the tabs may also cause excessive drag when deployed. Consequently, such arrangements may have a net negative performance benefit where the bypass ratio is less than 10:1 and only a slight benefit at higher bypass ratios.

A second example of a variable area bypass exhaust nozzle is disclosed in US 5655360. The arrangement includes an aft cowl joined to a forward cowl and having an aft end surrounding a core engine to define a discharge fan nozzle of minimum flow throat area. The aft cowl is axially translatable relative to the forward cowl from a first position fully retracted against the forward cowl, to a second position partially extended from the forward cowl. However, such an arrangement has been found to be heavy, and complex due to the requirement for large hydraulic actuators to move the aft cowl. The arrangement is also aerodynamically inefficient when deployed, since the fan air which passes between the aft and forward cowl when the aft cowl is deployed is directed generally radially outwardly, rather than in an axial direction, and therefore does not efficiently contribute to thrust.

### Summary of the Invention

According to a first aspect of the present invention, there is provided a gas turbine engine exhaust nozzle comprising:
radially inner and outer walls defining a duct therebetween, the outer wall comprising an upstream wall section and a downstream wall section, the duct terminating in a first outlet, a second outlet being defined between the upstream and downstream outer wall sections; and
a closure element locatable across the second outlet, the closure element being mounted to the upstream wall section, wherein a downstream end of the closure element is radially moveable between an open position in which the second outlet is open, and a closed position in which the second outlet is closed.

Accordingly, the invention provides a gas turbine engine exhaust nozzle in which a second, variable area outlet is provided upstream of the trailing edge of the nozzle. As a result, the nozzle area is increased at a relatively higher pressure part of the duct. Consequently, smaller movement of the moving part of the nozzle is required to provide the same mass flow through the nozzle in comparison to moveable tab type arrangements, such as those shown in GB 2374121. On the other hand, the arrangement is lower weight and provides lower drag compared to axially translatable cowl arrangements, such as those shown in US 5655360.

The inner wall may comprise an engine core casing, the outer wall may comprise a bypass nacelle, and the duct may comprise a bypass duct. Alternatively, the inner wall may comprise an engine core plug, the outer wall may comprise an engine core casing, and the duct may comprise an engine core exhaust duct.

The duct may comprise a convergent portion leading towards a minimum duct area at the first outlet. At least part of the second outlet may be located upstream of the minimum duct area. The second outlet may be located at a region of the duct having a higher in use pressure than the region of the duct adjacent the first outlet. The duct may comprise a divergent portion located downstream of the converging portion, and at least part of the second outlet may be located upstream of the divergent portion.

The closure element may be mounted to the upstream wall section by a hingeable mounting, and the closure element may be hingeably moveable between the open and closed positions.

The closure element may comprise a shape memory alloy material actuator configured to move the closure element between the open and closed positions. By using a shape memory alloy actuator to move the closure element between the open and closed positions, the actuator could be operated automatically by the different temperatures experienced by the actuator at different points of the flight cycle. Alternatively, or in addition, the actuator could comprise a heater and or a cooler, such that the actuator could be operated by heating or cooling the shape memory alloy material.

The shape memory alloy actuator may be configured to bend at least a portion of the closure element between the first and second positions. The shape memory actuator may be configured to radially outwardly bend an upstream portion of the closure element when the closure element is moved from the closed position to the open position. By bending the closure element between the open and closed positions, the external side of the closure element can provide a smooth aerodynamic profile in both the open and closed positions, thereby resulting in decreased drag.

The closure member may comprise a first resilient member configured to bias the closure member to the closed position. The closure member may comprise a second resilient member configured to bias a downstream portion of the closure member radially inwardly. Accordingly, when in the open position, an upstream portion of the closure member may be bent radially outwardly, and a downstream portion of the closure element may be bent radially inwardly relative to the upstream portion, such that the external surface of the closure member is generally flat when in the closed position, and generally S-shaped when in the open position. When deployed to the open position, such an arrangement may provide an improved external aerodynamic profile, thereby reducing drag, and provide a relatively smooth internal aerodynamic profile, such that the closure member directs air exiting the second outlet from the duct in a generally rearward direction, thereby increasing thrust provided by the flow exiting the second outlet and increasing the overall propulsive efficiency of the nozzle.

A downstream end of the closure element may overlap part of the downstream portion of the outer wall, and may lie radially outwardly of the outer wall. Alternatively, the overlapping part may lie radially inwardly of the outer wall. Accordingly, the closure element may be held in the closed position by the air flowing over the external side of the closure element in use.

The closure element may comprise overlapping radially inner and radially outer closure members which may define a chamber therebetween. One of the radially inner and outer closure members may be movable between the open and closed positions by an actuator, and the other of the radially inner and outer members may be moveable between the open and closed positions by a pressure differential across the respective closure member. By providing inner and outer closure members, the thickness of the closure element (i.e. the distance between the outer surface of the outer closure member, and the inner surface of the inner closure member) can be relatively large, while the individual closure members can be relatively thin, and therefore relatively flexible and light, and so require relatively little force to actuate. Due to the pressure gradient introduced by opening one of the closure members, the other closure member is forced to open, and so only one of the closure members may require an actuator. On the other hand, the thickness of the closure element may improve the aerodynamic profile of the nozzle arrangement, since the thickness of the closure element can be made to match the thickness of the remainder of the outer wall.

A downstream end of the downstream outer wall portion may be radially moveable between a first position in which the first outlet comprises a first area, and a second position, in which the first outlet comprises a second, relatively smaller area. The downstream end of the outer wall portion may be moveable from the first position to a third position, in which the first outlet comprises a third, relatively larger area compared to the first area. Accordingly, the downstream end of the nozzle arrangement can be used to further vary the nozzle exit area. Consequently, the closure element may require still less movement to accommodate the required area change, and so can be made lighter. Furthermore, the downstream end of the outer wall portion may be usable as a "trim" tab, providing fine adjustments during the flight cycle.

Where the duct comprises a bypass duct of a bypass gas turbine engine, a downstream end of the inner wall may be radially moveable between at least first and second positions, and may be radially moveable to a third position in order to vary the exit area of the engine core. The invention can therefore provide independent control over both the bypass and the core engine exit areas, thereby providing operability over a wider range of conditions, and further improvements in propulsive efficiency.

According to a second aspect of the present invention there is provided a gas turbine engine comprising an exhaust nozzle in accordance with the first aspect of the invention.

According to a third aspect of the present invention there is provided an aircraft comprising a gas turbine engine of the second aspect of the invention.

### Brief Description of the Drawings

Figure 1 shows a cross sectional view through a side of a first bypass flow gas turbine engine;
Figure 2 shows a part sectioned view of a second bypass flow gas turbine engine;
Figure 3a to 3c show side views of a first gas turbine engine exhaust nozzle in first, second and third configurations respectively;
Figures 4a and 4b show detailed views of part of the exhaust nozzle of Figure 3 in the second and first configurations respectively;
Figure 5 shows a cross sectional view through part of the exhaust nozzle of Figure 3 in the first configuration;
Figure 6 shows a cross sectional view through a further part of the exhaust nozzle of Figure 3 in the first configuration;
Figures 7a and 7b show cross sectional views of a second gas turbine exhaust nozzle in first and second configurations respectively; and
Figure 8 shows a side view of a third gas turbine engine exhaust nozzle in a first configuration.

### Detailed Description

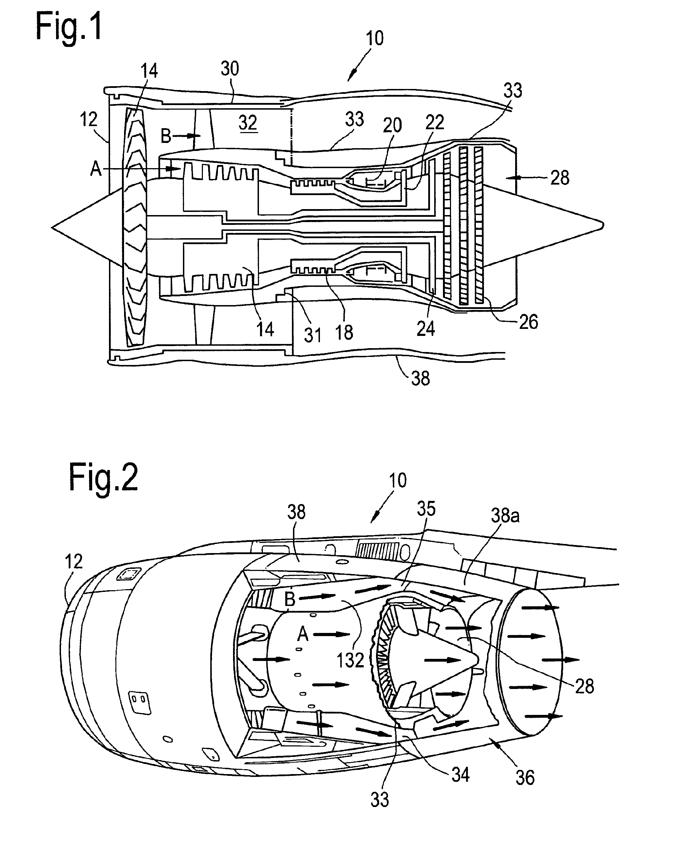

A first bypass gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and a core exhaust nozzle 28. Each of the compressors 16, 18 and turbines 22, 24, 26 are housed within a core casing 31. The core casing 31 includes a turbine casing 33 which houses the turbines 22, 24, 26, and a compressor casing 37 which houses the compressors 16, 18. The turbine casing 33 has a generally frusto-biconical shape such that the casing 33 diverges outwardly in a downstream direction from an upstream end to an inflection point, and then converges inwardly. The radial extent of the turbine casing 33 therefore increases from the upstream end in a downstream direction to accommodate the increased diameter of the low pressure turbines 33 relative to the intermediate and high pressure turbines 22, 24. The turbine casing 33 then converges again downstream of the inflection point. As well as accommodating the turbines 22, 24, 26, the shape of the turbine casing 33 also has aerodynamic effects, which are described in further detail below. A fan casing 30 surrounds the fan 14. A nacelle 38 surrounds the fan casing 30 and the core casing 31 and defines, in axial flow B, a bypass duct 32 and a bypass exhaust nozzle 34. The bypass gas turbine engine 10 is of a "short nacelle" type, in which separate bypass and core exhaust nozzles 34, 28 are provided, with the bypass exhaust nozzle 34 being located radially outwardly of the core engine exhaust nozzle 28 adjacent the turbine casing 33.

Figure 2 shows a perspective view of the bypass gas turbine engine 10. In some cases, as shown by the shaded region in Figure 2, a nacelle 38a may extend downstream of the core engine exhaust 28 such that the core and bypass flows A and B are combined in a single exhaust nozzle 36, known as a "common" or "integrated" exhaust nozzle. Such an arrangement is known in the art as a "long nacelle" type nacelle. Where the shaded region of the nacelle 30a is omitted, the nacelle 30 corresponds to a short nacelle. The invention can be equally applied to both short and long type nacelles 30, 30a, though the described embodiment relates to a short nacelle type 30.

As can be seen from Figure 2, the cross sectional area of the bypass duct 32 varies in the axial direction from the inlet 12 to the exhaust 34, 36 in both the short and long nacelle types 30, 30a. In particular, the duct 32 comprises a relatively narrow restriction 35 adjacent and radially outwardly of the turbine casing 33. Where a common exhaust nozzle 36 is provided as in the nacelle 38a, the cross sectional area of the duct 32 diverges again downstream of this restriction 35. During operating conditions, air flowing through the duct 32 at the exhaust 34, 36 will vary in speed from subsonic to sonic conditions. The airflow will generally be sonic or supersonic when the engine 10 is operated at above a threshold thrust level, or the aircraft to which the engine 10 is mounted is travelling at a forward speed approaching or exceeding the speed of sound, such as during take, climb, or top of climb (cruise). Consequently, when the flow through the duct 32 is supersonic in use, the nacelle 38a will act as a "convergent-divergent" or "de Laval" nozzle, such that the static pressure of the bypass flow B will be reduced at the restriction 35, and further reduced downstream of the restriction 35 relative to the pressure upstream of the restriction 35. Where the flow B through the duct 32 is at substantially subsonic speeds, the static pressure will generally be lowest at the narrowest point of the restriction 35 and higher both upstream and downstream of the restriction 35 due to the Venturi effect. In any event, where a short nacelle type 30 is employed, the pressure will be lowest adjacent the exhaust nozzle 34. In areas where the pressure is reduced, the local velocity of the gas flow is increased due to the Venturi principle.

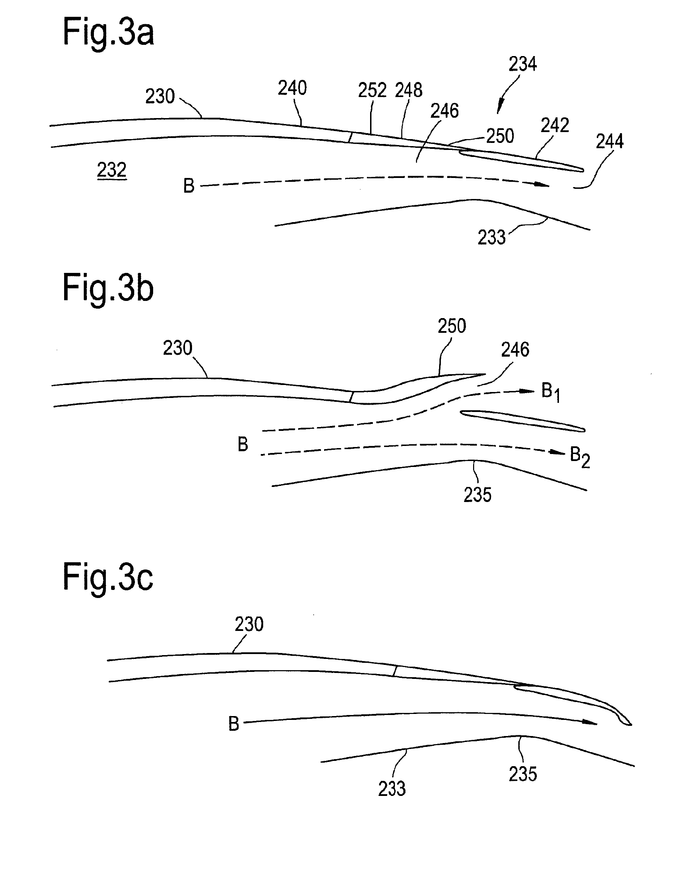

Figures 3a to 3c show a first gas turbine engine exhaust nozzle 234 in accordance with the invention in first, second and third configurations respectively. The nozzle 210 in this embodiment is shown as part of a short nacelle type gas turbine engine having separate bypass and core exhausts similar to that shown in Figure 2, i.e. the nacelle 38.

The exhaust nozzle 234 comprises inner and outer walls defined by a turbine casing 233 and a nacelle 238 respectively. A duct in the form of a bypass duct 232 is defined therebetween through which a bypass flow B flows in use. The nacelle 238 comprises a fixed upstream wall section 240 and at least one radially movable downstream wall section 242. The moveable downstream wall section may in turn comprise a fixed part 241 and a flexible part 243 located downstream of the fixed part. The flexible part is moveable radially, as shown in Figures 3a to 3c. In some cases, a plurality of radially moveable downstream sections may be provided distributed around the circumference of the nacelle 130, with fixed downstream wall sections being provided in between the moveable sections 242 to thereby connect the moveable downstream sections 242 to the fixed upstream section 240. Alternatively, the moveable downstream sections 242 could be connected to the turbine casing 233 by connection members extending therebetween. However, such an arrangement may be less aerodynamically efficient compared to connecting the moveable downstream sections 242 to the upstream sections 240. The duct 232 terminates in a first outlet 244 defined by the turbine casing 233 and the downstream outer wall section 242, a second outlet 246 being defined between the upstream 240 and downstream 242 outer wall sections.

At least one closure element in the form of a first slat 248 is provided, which is locatable across the second outlet 246 extending in a generally axial direction. Again, a plurality of second outlets 246 and first slats 248 could be provided distributed around the nacelle 130, with fixed upstream outer wall sections being provided extending between the second outlets 246 and first slats 248. A flexible seal arrangement may be provided at the junction between the fixed upstream outer wall sections and the first slats 248. Flexible seals may also be provided extending between the junctions between adjacent slats 248 to accommodate the increase in circumferential extent when the first slats 248 are moved from a closed position to an open position. An upstream end of the first slat 248 is mounted to a downstream end of the upstream outer wall section 240, while a downstream end of the first slat 248 overlaps radially outwardly on an upstream end of the downstream outer wall section 242. In this embodiment, the first slat 248 is fixedly mounted to the upstream outer wall section 240, such that a mounted part 252 of the first slat 248 cannot move relative to the upstream outer wall section 240. However, the remainder, and in particular, a downstream end 250 of the first slat 248 is radially moveable between an open position (corresponding to the second configuration shown in Figure 3b) in which the second outlet 246 is open, and a closed position (corresponding to the first and third configurations shown in figures 3a and 3c) in which the second outlet 246 is closed.

In this embodiment, the downstream outer wall portion 242 is provided in the form of a second slat 242, a downstream end 254 of which is also radially moveable between a first position in which the first outlet 244 comprises a first area, and a second position, in which the first outlet 244 comprises a second, relatively smaller area. In some embodiments, the second slat 242 may also be moveable to a third position (not shown) radially outwardly of the first position in which the first outlet 244 comprises a third, relatively larger area compared to the first position. Consequently, the second slat 242 can provide some of the required change area, such that the required change in area produced by the first slat 248 is reduced. However, it will be understood that this aspect is optional, and in other embodiments of the invention, the downstream outer wall portion 242 may be fixed such that the first outlet 244 is not variable.

In one example, where the bypass ratio is significantly higher than 10 to 1, the first slat 248 provides an increase in overall exhaust cross sectional area of 20% when in the open position compared to the closed position, while the second slat 242 provides an increase in overall exhaust cross sectional area of approximately 5% when in the third position compared to the first position. The second slat 242 provides a reduction in overall exhaust cross sectional area of approximately 5% when in the third position compared to the first position. Consequently, the variation in overall exhaust cross sectional areas provided by both the first and second slats 242, 248 is up to 30% of the nominal cross sectional area of a gas turbine engine having a bypass ratio of higher than 10 to 1.

In a further example, where the bypass ratio is approximately 10 to 1, the first slat 248 provides an increase in overall exhaust cross sectional area of 6% when in the open position compared to the closed position, while the second slat 242 provides an increase in overall exhaust cross sectional area of approximately 3% when in the third position compared to the first position. The second slat 242 provides a reduction in overall exhaust cross sectional area of approximately 3% when in the third position compared to the first position. Consequently, the variation in overall exhaust cross sectional areas provided by both the first and second slats 242, 248 is up to 12% of the nominal cross sectional area of a gas turbine engine having a bypass ratio of 5 to 1. Such an arrangement is predicted to result in a 0.9% reduction in overall fuel burn of an engine having a bypass ratio of between 5 to 1 and 10 to 1 or slightly higher. Such a reduction is highly significant, and can result in a large operational cost saving, while resulting in a relatively small increase in overall engine weight.

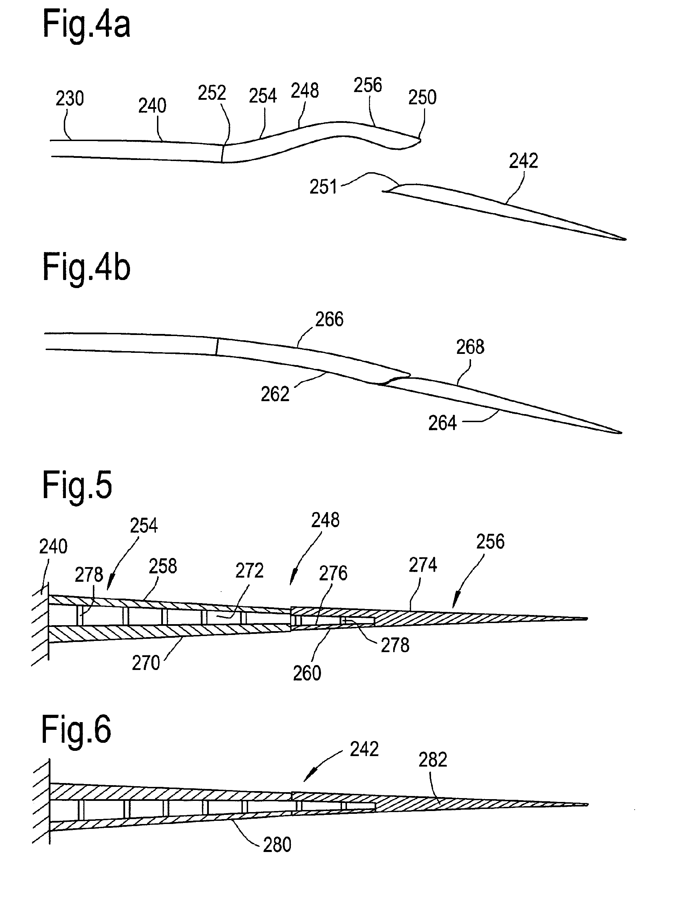

Figures 4a and 4b show the first and second slats 248, 242 in more detail, in which the first slat 248 is shown in the open and closed positions respectively.

The first slat 248 comprises main 254 and tip 256 sections. The main section 254 comprises a main actuator in the form of a first shape memory alloy member 258, and the tip section 256 comprises a tip actuator in the form of a second shape memory alloy member 260, as shown in further detail in Figure 5. Each shape memory member 258, 260 comprises a shape memory material such as NiTi (also known as Nitinol), though other suitable shape memory alloy materials may be used. Each shape memory alloy member 258, 260 is configured to change shape when transitioned between a martensitic and an austenitic phase, i.e. in response to a change in temperature. The change in temperature could be initiated either by the temperature of the gas stream B within the duct 232, or by the ambient temperature of the air flowing over the external side of the slat 248. Alternatively, or in addition, the change in temperature could be initiated or by a cooler or a heater such as that shown in US 2006/0000211 for example. In one example, the alloy may be configured to transition from the martensitic phase to the austenitic phase at a temperature of approximately 95° C, and may transition from the austenitic phase to the martensitic phase at a temperature of approximately 40° C. Accordingly, the shape memory alloy material can be used to move the slats 242 248 from the fully closed position and the third position respectively, to the fully open position and the second position respectively within approximately 10 seconds.

The first shape memory alloy member 258 is configured to bend in order to move the main section 254 radially outwardly relative to the upstream outer wall portion 240 to move the first slat 248 from the closed to the open position when the shape is changed due to the phase change. The second shape memory alloy member 260 is configured to bend to move the tip section 256 radially inwardly relative to the upstream outer wall portion 240 when the shape is changed due to the phase change. Alternatively, the tip section 256 may comprise a superelastic material such as TiNi or TiNiZnSn. In this case, the tip portion 256 is biased to the open position as shown in Figure 4a, such that when the main section is moved radially outwardly by the first shape memory alloy member 258, the second shape memory alloy member acts as a spring to urge the tip portion 256 radially inwardly. In a still further alternative, the second shape memory alloy member 260 could be replaced by a conventional spring.

The downstream end 250 of the first slat 248 acts as a trailing edge when in the open position. Accordingly, the downstream end 250 is tapered to provide low aerodynamic drag when in the open position. As shown in Figure 4a, the internal surface of the tip has a convex upward bend toward the downstream end, while the external surface of the tip is substantially flat. Similarly, the upstream end 251 of the second slat 242 acts as a leading edge when the first slat 248 is in the open position, and so is also tapered to provide low aerodynamic drag when the first slat 248 is in the open position, having a convex upper surface and a flat lower surface at the upstream end 251. When in the closed position, as shown in Figure 4b, the internal 262, 264 and external sides 266, 268 of the first and second slats 248, 242 respectively are shaped to form a substantially continuous surface on each side, such that drag is minimised when the first slat 248 is in the closed position. The downstream end 250 of the first slat 248 and the upstream end 251 of the second slat 242 meet and slightly overlap, such that the respective ends 250, 251 form a substantially airtight surface when the first slat 248 is in the closed position.

Figure 5 shows a cross section through the first slat 248. The first shape memory alloy member 258 is positioned on an external side (i.e. a radially outer side) of the main section 254 of the slat 248 and is joined to the upstream outer wall section 240 at an upstream end, and the tip section 256 at a downstream end. A first metallic strip 270 is provided on an internal side (i.e. a radially inner side) of the main portion 254, and is similarly joined to the upstream outer wall section 240 at an upstream end, and the tip section 256 at a downstream end. The first strip 270 and first shape memory alloy member 258 are separated by a gap 272 therebetween, and are joined to one another at spaced intervals by spacer members 278.

The second shape memory alloy member 260 is positioned on an internal side (i.e. a radially inner side) extending part way along the tip portion 256 of the slat 248. The second shape memory alloy member 260 is joined to the downstream end of the first strip 270 at an upstream end, and is joined to a second metallic strip 278 at a downstream end. The second strip 274 is provided on an external side (i.e. a radially outer side), overlapping the second shape memory alloy member 260, and is joined to the first shape memory alloy member 258 at an upstream end, and overlaps the second slat 242 at a downstream end. The second strip 274 and first shape memory alloy member 258 are separated by a radial gap 276 therebetween, and are joined to one another at spaced intervals by further spacer members 278. Each of the strips 272, 274 and spacer members 278 is formed of a suitable, lightweight, flexible resilient material such as aluminium or carbon fibre.

Figure 6 shows a similar view to Figure 5, but of the second slat 242. The second slat 242 is of a similar construction to the first slat 248, but only a single third shape memory alloy member 280 is provided on an internal (i.e. radially inner) side of the second slat 242. The second slat 242 comprises a strip 282 at a downstream edge of the third shape memory alloy member 280, which forms a trailing edge of the nacelle, and which also extends radially outwardly of the third shape memory alloy member 280.

In use, the exhaust nozzle 234 is operated as follows.

Before the engine is started, the exhaust nozzle is in the first configuration, as shown in Figure 3a. No power is required to move the nozzle to the first configuration, as the shape memory alloy actuators 258, 260, 280 will automatically move to this position and remain there at ambient temperatures, as they will be in their martensitic states.

As the engine is started, and the thrust is increased to take off power, either the increased heat in the duct 32 caused by the moving airflow B, or the activation on a heating arrangement (not shown) will cause the first shape memory alloy actuator 258 to increase in temperature and bend in a radially outward direction, thereby causing the main section 254 to bend outwardly. Similarly, either the heater or the airflow in the duct 32 will cause the temperature of the second shape memory actuator to increase, which will cause the second shape memory actuator 260 to bend radially inwardly, thereby causing the tip to bend inwardly relative to the main portion 254 and thereby move the first slat 248 from the closed position to the open position. Alternatively, where the tip 256 comprises a superelastic material, the tip will move radially inwardly due to the biasing of the superelastic material. As the first slat 248 moves from the closed position to the open position, the second outlet 246 will open, allowing a portion of the airflow B to flow through the duct 232 out through the second outlet 246, as shown by airflow B1. The remainder of the airflow will continue to flow out through the first outlet 244, as shown by the airflow B2 in Figure 3b. Thus the total exit area of the nozzle (i.e. the area of the first 244 and second 246 outlets combined) is increased when the engine thrust is increased above a predetermined level.

The "S-shape" profile of the first slat 248 caused by the outward bending of the main portion 254 and inward bending of the tip portion 256 has been found to efficiently direct the airflow B1 in a rearward direction when deployed in the open position. Such an arrangement also reduces flow separation at the outer leading edge of the first slat 248, thereby resulting in an aerodynamically efficient configuration.

Once the aircraft has taken off, and the thrust is decreased to climb power, the temperature in the duct 232 decreases again, or, where a heater is provided, the heater is turned off. This causes the first and second shape memory actuators 258, 260 to return to their original shapes, thereby causing the first slat 248 to return to the closed position. The return to the closed position may be assisted by the resilience of the strips 270, 274, 282 and spacer members 274, 278, as well as the airflow impinging on the slat 248 as the airspeed of the aircraft increases. In the described embodiment, the actuators 258, 260 are capable of returning to their original shapes in approximately 10 seconds.

Once the aircraft reaches a cruising condition, known as "top of climb", the thrust is reduced again to cruise thrust levels.

During operation, the first and second slats 248, 242 may gradually move between the closed and open positions, such that the area of the nozzle can be continuously adjusted between fully closed (as shown in Figure 3a) and fully opened (as shown in Figure 3b) or a position in between. This may happen automatically on the basis of bypass duct airflow B temperature. Alternatively, the position of the first and second slats 248, 242 could be selected by the pilot or autopilot, and controlled by varying the temperature of the shape memory actuators 258, 260, 280 by controlling their temperatures using heaters (not shown) configured to control the temperature of the actuators 258, 260, 280 individually.

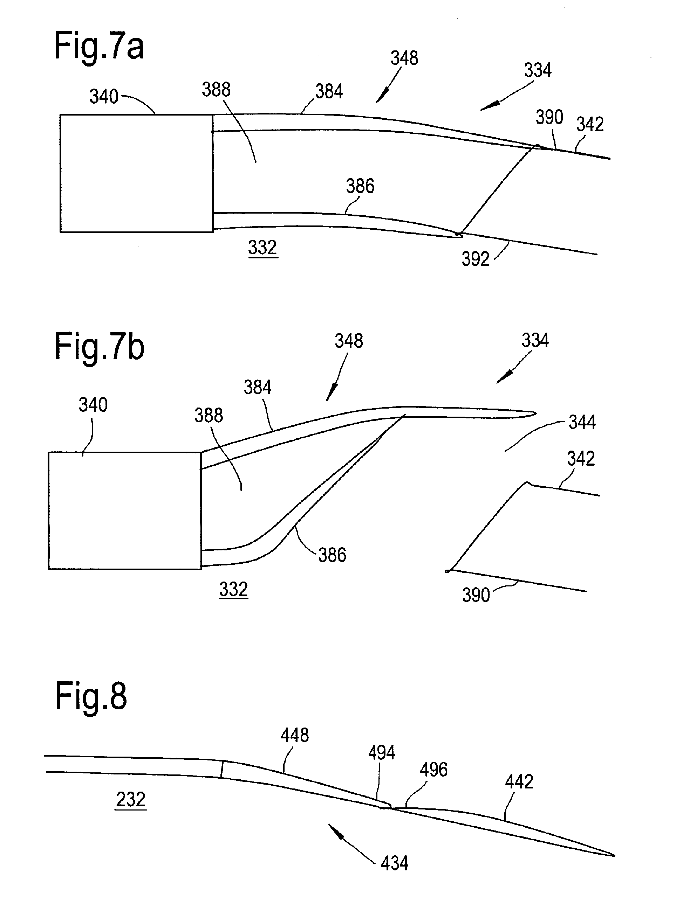

Figures 7a and 7b show similar views to those of Figures 4a and 4b, but of a second exhaust nozzle 334. The second exhaust nozzle 334 is similar to the first exhaust nozzle 234, and includes inner and outer walls defining a bypass duct therebetween. The outer wall comprises an upstream wall section 340 and a downstream wall section 342. The upstream wall section 340 is fixed, and the downstream wall section 342 may be fixed, or may be radially moveable, similar to the second slat 242 of the first exhaust nozzle 234. A second outlet 344 is provided between the upstream and downstream outer wall sections 340, 342, across which a closure element is locatable.

The closure element comprises first and second closure members 384, 386. Each closure member 384, 386 is mounted from the upstream outer wall section 340 extending in an axial direction, and has a free end overlapping the downstream outer wall section 343.

The first closure member 384 is located radially outwardly of the second closure member 386, such that, when in the closed position, the first closure member 384 provides an aerodynamically continuous surface across the external side of the nacelle, and the second closure member 384 provides an aerodynamically continuous surface across the internal side of the nacelle. Each closure member 384, 386 is somewhat thinner (i.e. has a smaller radial extents) in comparison to the closure element 248. Consequently, a radially extending chamber 388 is provided between the first and second closure members 384, 386.

The first closure member 384 has a similar structure to the closure element 248, and comprises first and second shape memory actuators (not shown) which are configured to move the first closure member 384 between the open (shown in Figure 7b) and closed (shown in Figure 7a) positions. Alternatively, the first closure member 384 could have a simpler structure, comprising first and second shape memory actuators, but omitting the strips and spacer members. The first closure member 384 is tapered from the upstream end to a downstream end to define an aerodynamic profile. The first closure member 384 overlaps an external surface 390 of the downstream outer wall section 342.

The second closure member 386 has a similar profile to the first closure member 384, but has a different internal structure. The second closure member 386 comprises a strip of resilient material such aluminium or carbon fibre, and does not include an actuator. When in the closed position, the second closure member 386 overlaps across an internal surface 392 of the downstream outer wall section 342.

The exhaust nozzle 334 is operated as follows. Both closure members 384, 386 are biased to the closed position, as shown in Figure 7a and remain in the closed position when the temperature of the first closure member 386 is below the phase change temperature (i.e. when the engine is turned off or at low thrust conditions). When the engine is operated, air flows through the duct 332 creating a high pressure region radially inwardly of the second closure member 386. As a result, air leaks past the second closure member 386 into the radial chamber 388 until the pressure across the second closure member 386 is balanced. As long as the first closure member 384 is in the closed position, air is prevented from escaping through the first closure member (or at least leaks at a relatively low rate), thereby maintaining the air in the chamber 388 at a relatively high pressure.

When the temperature of the first closure member 386 is increased above the phase change temperature (either as a consequence of actuation of the heater, or an increase in duct or ambient air temperature), the shape memory actuator bends to move the first closure member 384 radially outwardly and thereby release the air trapped in the chamber 388. As a result, a pressure differential is created across the internal and external sides of the second closure member 386. The pressure differential is sufficient to overcome the closing force exerted by the resilience of the second closure member 386. The second closure member 386 is thus caused to move radially outwardly, thereby opening the second outlet 344.

When the temperature of the shape memory actuators of the first closure member 386 falls, the first closure member 386 is urged back to the closed position by the resilience of the first closure member 386. The second outlet 344 is thus closed, which reduces or stops the flow out of the second outlet 344. As a result, pressure builds up again in the chamber 388. Consequently, the pressure differential is no longer sufficient to overcome the closing force exerted by the resilience of the second closure member 386, and the second closure member 386 is caused to move back to the closed position.

Figure 8 shows a third exhaust nozzle 434 in a closed position. The third exhaust nozzle 434 is similar to the first exhaust nozzle 234 and includes first and second slats 448, 442. However, the profile shape of the second slat 448, 442 is different relative to the slat 242 of the first exhaust nozzle 234. The upstream end 496 of the second slat 442 is tapered to a relatively sharp point. Such an arrangement ensures a smooth profile on both the internal and external sides of the duct when the slat 248 is in the closed position. Consequently, the arrangement is highly aerodynamically efficient.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For example, the second slats could be omitted. Where the second slats are omitted, the nozzle could be configured such that the first slats are fully deployed on takeoff, partially deployed on climb, and fully closed at top of climb. However, in such an arrangement, the slats may have to be longer, and therefore stiffer, which may increase the weight of the nozzle. On the other hand, such an arrangement may be simpler and less expensive, while retaining many of the efficiency advantages of the arrangement having first and second slots.

Instead of moving between the open and closed positions by bending movement, the slats may be hinged, and may therefore hingeably move between the open and closed positions. Such an arrangement may be simpler and more robust. However, hinged slats may be less aerodynamically efficient, particularly when in the open position.

The nozzle may be employed in a turbojet engine. In a turbojet engine, the inner wall of the nozzle would comprise the engine core plug, and the outer wall of the nozzle would comprise the engine core casing. The nozzle could similarly be employed in the engine core of a turbofan engine.

Other types of actuators may be used to move the slats between the open and closed positions, particularly where the slats are hingeable. For example, the actuators may comprise hydraulic or pneumatic rams.

## Claims

1. A gas turbine engine exhaust nozzle (234) comprising:
radially inner (233) and outer walls (230) defining a duct (232) therebetween, the outer wall (230) comprising an upstream wall section (240) and a downstream wall section (242), the duct (232) terminating in a first outlet (244), a second outlet (246) being defined between the upstream and downstream outer wall sections (230, 240); and
a closure element (248) locatable across the second outlet (246), the closure element (248) being mounted to the upstream wall section (230), wherein a downstream end (250) of the closure element (248) is radially moveable between an open position in which the second outlet (246) is open, and a closed position in which the second outlet (246) is closed.

2. An exhaust nozzle according to claim 1, wherein the inner wall (233) comprises an engine core casing, the outer wall comprises a bypass nacelle (230), and the duct comprises a bypass duct (232).

3. An exhaust nozzle according to claim 1, wherein the inner wall (233) comprises an engine core plug, the outer wall comprises an engine core casing, and the duct comprises an engine core exhaust duct.

4. An exhaust nozzle according to any of the preceding claims, wherein the duct (232) comprises a convergent portion upstream of a divergent portion, wherein at least part of the second outlet (246) is located upstream of the divergent portion.

5. An exhaust nozzle according to claim 4, wherein the second outlet (246) is located at a region of the duct (232) having a higher in use pressure than the region of the duct (232) adjacent the first outlet (244).

6. An exhaust nozzle according to any of the preceding claims, wherein the closure element (248) is mounted to the upstream wall section (230) by a hingeable mounting, and the closure element (248) is hingeably moveable between the open and closed positions.

7. An exhaust nozzle according to any of claims 1 to 5, wherein the closure element (248) comprises a shape memory alloy material actuator (258, 260) configured to move the closure element (248) between the open and closed positions.

8. An exhaust nozzle according to claim 7, wherein the actuator (258, 260) is configured to bend at least a portion of the closure element (248) between the first and second positions.

9. An exhaust nozzle according to claim 7 or claim 8, wherein the closure member (248) comprises a first resilient member (258) configured to bias the closure member (248) to the closed position.

10. An exhaust nozzle according to any of claims 7 to 9, wherein the closure member (248) comprises a second resilient member (250) configured to bias a downstream portion of the closure member (248) radially inwardly.

11. An exhaust nozzle according to any of the preceding claims, wherein a downstream end (250) of the closure member (248) overlaps part of the downstream portion of the outer wall (230) and lies radially outwardly of the outer wall (230).

12. An exhaust nozzle according to any of the preceding claims, wherein the nozzle (234) comprises overlapping radially inner (270) and radially outer (258) closure members which define a radial gap (272) therebetween.

13. An exhaust nozzle according to claim 12, wherein one of the radially inner (270) and outer closure (258) members is movable between the open and closed positions by an actuator (258), and the other of the radially inner (270) and outer (258) members is moveable between the open and closed positions by a pressure differential between the duct (232) and the radial gap (272).

14. An exhaust nozzle according to any of the preceding claims, wherein a downstream end of the downstream wall portion (242) is radially moveable between a first position in which the first outlet (244) comprises a first area, and a second position, in which the first outlet (244) comprises a second, relatively smaller area.

15. A gas turbine engine (10) comprising a nozzle arrangement (234) in accordance with any of the preceding claims.
